# FASCICULE DE BREVET EUROPEEN

(11) **EP 4 077 949 B1**
(45) Date de publication et mention de la délivrance du brevet: **22.03.2023**
(21) Numéro de dépôt: 20829606.1
(22) Date de dépôt: 18.12.2020
(51) Int. Cl.: F04D 29/56, F01D 5/14, F01D 17/16, F04D 29/54

(54) **MODULE DE COMPRESSEUR POUR TURBOMACHINE**
VERDICHTERMODUL FÜR TURBOMASCHINE
COMPRESSOR MODULE FOR TURBOMACHINE

(30) Priorité: 18.12.2019 FR 1914728
(43) Date de publication de la demande: 26.10.2022
(73) Titulaire: SAFRAN AIRCRAFT ENGINES, 75015 Paris (FR)
(72) Inventeur: LEBEAULT, Eva, Julie, 77550 Moissy-Cramayel (FR); SOULAT, Laurent, 77550 Moissy-Cramayel (FR)
(74) Mandataire: Lecomte & Partners
(86) Numéro de dépôt international: PCT/EP2020/086933
(87) Numéro de publication internationale: WO 2021/123098

(56) Documents cités:
- FR-A1- 2 595 117
- US-A1- 2006 275 110
- US-A1- 2013 259 672
- US-A1- 2016 061 054
- US-B1- 10 174 763

## Description

### Domaine technique

L'invention a trait à un ensemble pour turbomachine. Plus précisément, l'invention a trait à un module de carter de compresseur comprenant des bras radiaux et des aubes statoriques.

### Technique antérieure

Un carter de compresseur de turbomachine axiale peut comprendre un tronçon structurel composé essentiellement d'un anneau externe, d'un moyeu central et de bras structuraux, couramment appelés « struts », s'étendant principalement radialement entre le moyeu et l'anneau. Le carter structural forme une structure portante du réacteur. Il se présente généralement sous la forme d'une pièce monobloc obtenue par fonderie et peut délimiter une veine d'air en forme de col de cygne.

En amont et en aval du col de cygne sont généralement disposées deux rangées annulaires d'aubes statoriques.

Le document FR 3 027 053 A1 décrit un exemple d'un tel carter structural.

Un espace important demeure entre les bras et la rangée d'aubes statoriques directement en aval de ces bras. Cet espace est source de pertes de charge car le flux dans le sillage des bras n'est pas idéalement maîtrisé pour rencontrer le bord d'attaque des aubes statoriques. Il existe donc un potentiel pour améliorer les performances du compresseur. Le document US 2006/275110 A1 qui montre des aubes dans ces espaces inter-bras ne résout pas ce problème.

### Exposé de l'invention

L'invention a pour objectif d'éliminer les pertes de charges à l'interface entre les bras structuraux et la rangée d'aubes statoriques directement en aval de ces bras et ainsi améliorer les performances du compresseur.

L'invention a pour objet un module de compresseur de turbomachine, comprenant : un moyeu central sensiblement axisymétrique ; un anneau externe, coaxial au moyeu central ; et une rangée annulaire de bras s'étendant du moyeu central à l'anneau externe, remarquable en ce que chaque bras dispose d'une portion amont, fixe, et d'un volet aval pivotable.

L'intégration (dans le sens du positionnement) d'un aubage déviant le flux dans les bras permet d'éviter les pertes de charge identifiées ci-dessus dans les compresseurs actuels. Ces pertes sont d'ailleurs influencées par le dimensionnement des bras qui contiennent souvent des servitudes tels que des canalisations d'huiles ou de carburant ou du câblage ou éventuellement un arbre radial de transmission.

Selon l'invention, le module comprend une rangée annulaire d'aubes statoriques à orientation variable s'étendant du moyeu central à l'anneau externe, les bras définissant des espaces inter-bras entre deux bras circonférentiellement adjacents et les aubes statoriques étant disposées au moins partiellement dans les espaces inter-bras. L'intégration d'aubes statoriques situées en chevauchement axial entre les bras permet en outre l'avancement de l'ensemble de la rangée d'aubes statoriques et permet ainsi de réduire la longueur de la turbomachine. La turbomachine en devient donc plus compacte et plus légère.

Selon un mode avantageux de l'invention, la portion amont dispose d'une cavité ouverte vers l'aval et formant une portion de cylindre, le volet étant reçu dans ladite cavité. Un tel agencement permet une continuité de la surface de guidage de l'air et limite donc les pertes de charge à l'interface portion fixe / volet.

Selon un mode avantageux de l'invention, la rangée annulaire d'aubes statoriques est une première rangée, et le module comprend en outre une seconde rangée annulaire d'aubes statoriques agencée dans les espaces inter-bras et axialement distante de la première rangée d'aubes. Le positionnement dans l'espace inter-bras des rangées d'aubes initialement en amont et en aval des bras améliore encore la compacité et le poids de la turbomachine.

Selon un mode avantageux de l'invention, la portion amont de chaque bras est symétrique par rapport à un axe parallèle à l'axe du moyeu. Cette géométrie a l'avantage d'être neutre pour un écoulement du flux qui n'a pas de composante tangentielle en amont des bras.

Selon un mode avantageux de l'invention, les aubes et les volets disposent de bords de fuite respectifs qui partagent une position axiale commune. En d'autres termes, les volets et les aubes statoriques, ou a *minima* leurs extrémités aval, sont aligné(e)s axialement. Cet agencement permet un écoulement du flux circonférentiellement homogène.

Selon un mode avantageux de l'invention, le moyeu central comprend une surface radialement externe de guidage du flux d'air dont l'orientation au droit des volets forme un angle avec l'axe de symétrie du moyeu central qui est compris entre 0 et 10°. Une telle inclinaison de la surface de guidage de l'air est suffisamment faible pour limiter les pertes de charge sur la portion interne des aubes et des volets qui peuvent s'écartent de la surface de guidage dans certaines de leurs positions angulaires.

Selon un mode avantageux de l'invention, les volets ont une section respective sensiblement identique à la section des aubes. Par « section », on entend ici le profil dans un plan en coupe, par exemple un plan perpendiculaire au bord de fuite en un point du bord de fuite donné. L'écoulement est ainsi plus homogène en sortie du module.

Selon un mode avantageux de l'invention, un mécanisme d'actionnement commun commande l'orientation des aubes et le pivotement des volets. Cette solution simplifie l'actionnement des volets et des aubes. Alternativement, deux mécanismes indépendants peuvent être agencés pour orienter les aubes statoriques ou certaines aubes selon une orientation donnée et pour orienter les volets selon une autre orientation.

L'invention a également pour objet une turbomachine comprenant un compresseur basse-pression et/ou un compresseur haute-pression, muni d'un module selon l'un des modes de réalisation exposés ci-dessus, la turbomachine comprenant une rangée d'aubes rotoriques directement en aval du module.

Ainsi, les pertes de charge entre les bras structuraux et la rangée d'aubes statoriques directement en aval des bras sont éliminées.

### Brève description des dessins

La figure 1 représente une turbomachine selon l'état de la technique ;
La figure 2 illustre une turbomachine axiale selon l'invention ;
La figure 3 esquisse le module de compresseur selon l'invention dans une coupe perpendiculaire à l'axe de la turbomachine ;
La figure 4 illustre une vue partielle du module selon l'invention, vu radialement depuis l'extérieur ;
Les figures 5A-6B montrent deux alternatives des bras structuraux ;
La figure 7 représente une vue partielle du module selon un autre mode de l'invention, vu radialement depuis l'extérieur ;
La figure 8 représente une vue partielle du module, vu latéralement en le montrant dans son étendue radiale, en coupe longitudinale.

### Description détaillée

Dans la description qui va suivre, les termes « interne » et « externe » renvoient à un positionnement par rapport à l'axe de rotation d'une turbomachine. La direction axiale correspond à la direction le long de l'axe de rotation de la turbomachine qui coïncide avec l'axe d'axisymétrie du moyeu du module de carter. La direction radiale est perpendiculaire à l'axe de rotation. L'amont et l'aval sont en référence au sens d'écoulement principal du flux dans la turbomachine. Le terme « solidaire » est à comprendre comme solidaire en rotation.

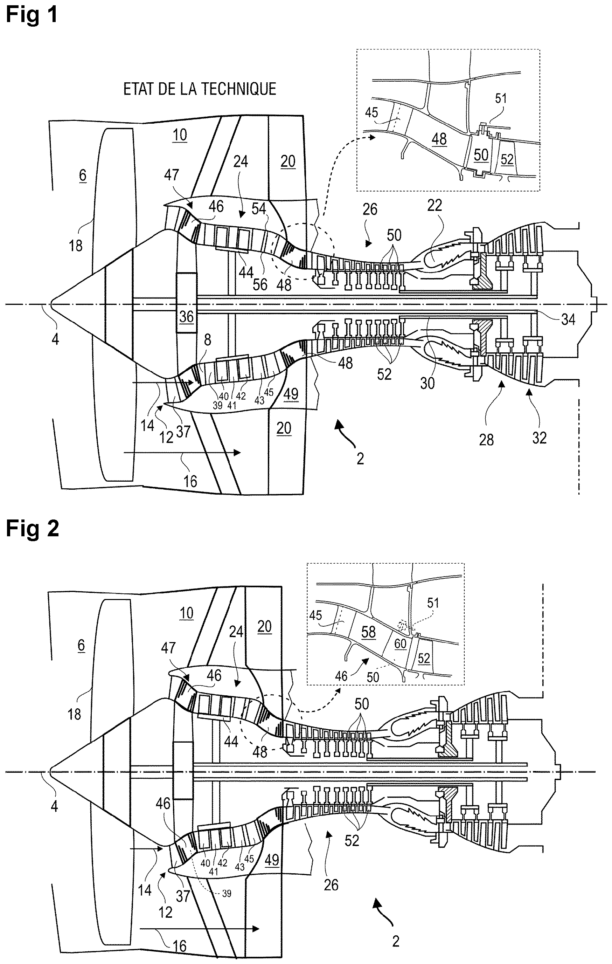

La figure 1 représente de manière simplifiée une turbomachine axiale de l'état de la technique. Il s'agit ici d'un turboréacteur 2 double-flux.

La turbomachine 2 présente un axe de rotation 4. Une entrée annulaire 6 se divise en une veine primaire 8 et en une veine secondaire 10 grâce à un bec de séparation 12 de forme circulaire. Ces veines 8 et 10 sont empruntées par, respectivement, un flux primaire 14 et un flux secondaire 16, qui se rejoignent en sortie de la turbomachine 2. Les flux primaire 14 et secondaire 16 sont des flux annulaires coaxiaux et emmanchés l'un dans l'autre. Ils sont canalisés par les parois internes et externes de la turbomachine 2.

Le flux secondaire 16 est accéléré par une soufflante 18 disposée en entrée 6, afin de générer une poussée pour le vol d'un aéronef. Des pales de redressement 20 peuvent être disposées dans la veine secondaire 10 et être configurées afin d'augmenter la composante axiale de la vitesse du flux secondaire. La soufflante 18 est disposée en amont de la veine primaire 8 et de la veine secondaire 10.

La turbomachine 2 comprend une zone de compression formée par deux compresseurs 24, 26, une chambre de combustion 22 et une zone de détente 28, 32. Les compresseurs 24, 26 sont composés d'un compresseur basse-pression 24 et d'un compresseur haute-pression 26.

Le compresseur haute-pression 26 peut être placé en entrée de la chambre de combustion 22.

En aval de la chambre de combustion 22, la turbomachine 2 peut présenter une turbine haute-pression 28 couplée à un arbre haute-pression 30, puis une turbine basse-pression 32 couplée à un arbre basse-pression 34. Ce dernier peut être indépendant en rotation de l'arbre haute-pression 30. Ces turbines 28, 32 peuvent former la zone de détente du flux primaire 14.

En fonctionnement, la puissance mécanique reçue par les turbines 28, 32 est transmise aux arbres 30, 34 qui mettent en mouvement les compresseurs 24, 26. Ces derniers comportent plusieurs rangées d'aubes de rotor associées à des rangées d'aubes de stator. Les aubes de rotor sont entraînées par les arbres 30, 34 autour de l'axe de rotation 4 pour générer un débit d'air et comprimer progressivement ce dernier jusqu'à l'entrée de la chambre de combustion 22.

La turbomachine peut comprendre des moyens de démultiplication, tel un réducteur 36 qui entraîne la soufflante 18 à une vitesse de rotation plus faible que celle des aubes rotoriques. Le compresseur basse pression 24 ou booster est ici dit « rapide ». Grâce au réducteur 36, deux turbines suffisent pour entraîner les compresseurs et la soufflante à trois vitesses de rotation respectives différentes.

Dans cet exemple, le compresseur basse-pression 24 comprend deux rangées d'aubes rotoriques 40, 42 solidaires de l'arbre 34 via un rotor 44.

Le compresseur 24 comprend des aubes statoriques 39, 41 intercalées entre les aubes rotoriques 40, 42.

Le compresseur 24 peut comprendre une alternance d'aubes statoriques et rotoriques, ou comme dans l'exemple illustré, deux rangées successives d'aubes statoriques 43, 45 dans sa partie aval. L'ensemble des aubes statoriques 39, 41, 43, 45 forme le redresseur 35 du compresseur 24.

Le stator de la turbomachine 2 peut comprendre plusieurs modules de carters de support, dont un module amont 47 et un module aval 49 disposés de part et d'autre du compresseur 24. Ces modules 47, 49 peuvent comprendre des manches annulaires formant des tronçons de la veine primaire 8. Ils peuvent présenter des bras de support (dits « struts » en anglais) 46, 48 traversant radialement la veine 8. Les manches annulaires peuvent présenter des profils en col de cygne. Elles peuvent marquer des réductions importantes de diamètre de la veine primaire 8.

Le module amont 47 et ses bras 46 peuvent supporter le réducteur 36.

En amont des bras 46 est prévue une rangée d'aubes statoriques 37 à proximité du bec 12. En aval des bras 48 figure le compresseur haute-pression 26 muni d'aubes statoriques 50 et rotoriques 52. Ces dernières sont entraînées en rotation au moyen de l'arbre 30.

En général, directement en amont et directement en aval des bras 46, 48 sont disposées des rangées d'aubes statoriques, afin que le flux d'air qui parcourt les espaces inter-bras ait un écoulement sans composante tangentielle. Ces rangées peuvent être, ou non, des rangées d'aubes à calage variable, c'est-à-dire que leur orientation autour d'un axe sensiblement radial est ajustable. Ces aubes sont supportées par une virole externe et interne en aval ou en amont des carters structuraux 47, 49.

Une portion en haut à droite de la figure 1 représente une vue agrandie de l'entrée du compresseur haute-pression 26. On y voit notamment la succession dans le sens de l'écoulement, d'une rangée annulaire de bras 48, suivie d'une rangée annulaire d'aubes statoriques 50 dont l'orientation est variable au moyen d'un dispositif 51. Une rangée d'aubes rotoriques 52 est également illustrée en aval des aubes à calage variable 50. Celle-ci est la rangée rotorique la plus amont du compresseur haute-pression 26.

La figure 2 représente une turbomachine selon l'invention.

Celle-ci diffère de la turbomachine connue de l'état de la technique essentiellement au travers de la conception des modules 47 et 49. L'un, l'autre ou les deux modules structuraux 47, 49 peut/peuvent comprendre des bras structuraux 46,48 ayant une portion amont fixe 58 et une portion aval pivotante ou volet 60.

Optionnellement et tel que décrit sur la figure 2, au moins une rangée d'aubes statoriques 37, 39, 45, 50 se présente en chevauchement axial des bras structuraux 46, 48.

Ainsi, comme il transparaît d'une comparaison entre la longueur de la turbomachine de la figure 2 et celle de la figure 1 (voir trait mixte en bas à droite de la figure 1 et en haut à droite de la figure 2), l'intégration d'aubes statoriques dans le module permet un gain de longueur de la turbomachine.

La figure 2 illustre les aubes 37 partiellement en chevauchement des bras 46 et les aubes 39 entièrement intégrées entre les bras 46. Alternativement, les aubes 39 peuvent n'être que partiellement au niveau axial des bras 46 et/ou les aubes 37 être en amont des bras 46.

Les mêmes modifications peuvent être faites, en complément ou en alternative, sur les bras 48 du module 49. Un encart en vue agrandie matérialise les aubes 50 à calage variable en entrée du compresseur haute-pression 26 (qui sont cachées par le bras 48). Ainsi les aubes rotoriques 52 peuvent être placées directement en aval des bras 48.

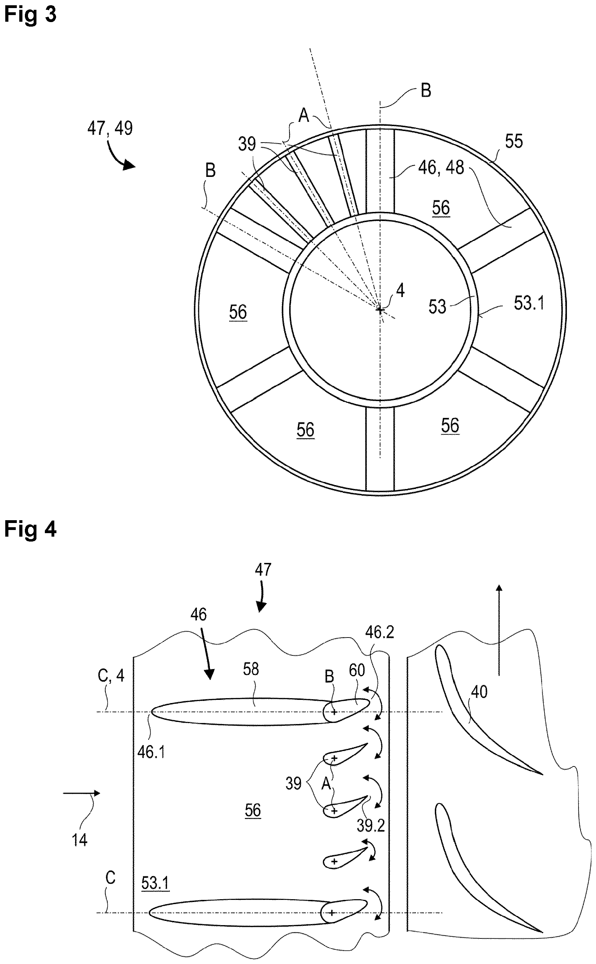

La figure 3 montre une vue du module 47 ou 49 en coupe perpendiculaire à l'axe 4. Le module 47, 49 est formé des bras 46 ou 48, des aubes 37, 39 ou 45, d'un moyeu 53 et d'un anneau externe 55. Dans la suite, les numéros de référence en rapport au module 47 seront utilisés. L'homme du métier comprendra que les mêmes enseignements peuvent être appliqués, alternativement ou en combinaison, au module 49.

Les bras 46 définissent, circonférentiellement entre deux bras 46 adjacents, des espaces inter-bras 56.

Par souci de clarté, seules trois aubes 39 sont représentées sur la figure 3 dans un espace inter-bras 56. Plusieurs espaces inter-bras 56 et préférentiellement tous les espaces 56 accueillent des aubes 39 en nombre égal ou différent, préférentiellement régulièrement espacées circonférentiellement.

Le moyeu central 53 présente une surface externe 53.1 qui peut être sensiblement conique. La surface externe 53.1 peut aussi être courbe, voire avoir un point d'inflexion, pour que la veine parcourue par le flux d'air dans le module 47 ressemble à un « col de cygne ». Le diamètre du moyeu 53 en amont est plus grand que son diamètre aval.

Les bras 46 sont préférablement régulièrement distribués angulairement autour du moyeu central 53. Alternativement, de plus nombreux bras 46 ou des bras d'épaisseur circonférentielle plus importante peuvent être prévus à des positions clés notamment pour le passage de conduites de fluide.

Les différentes pièces du module 47 peuvent être assemblées par soudage, par exemples laser ou electron beam welding.

Les aubes intégrées au module 47 et notamment les aubes 39 peuvent être orientables autour d'un axe A respectif à chaque aube, qui est ici représenté comme radial. Un mécanisme d'actionnement (non représenté) commun à toutes les aubes - par exemple un anneau et une série de bielles - permet de pivoter les aubes autour de leur axe A.

Le mécanisme d'actionnement de l'orientation des aubes peut être par exemple celui illustré dans le document EP 3 361 058 A1. Plusieurs mécanismes d'actionnement sous la forme d'anneaux de synchronisation coaxiaux et indépendant permettent de pivoter des aubes selon des angles différents.

Les bras 46, 48 s'étendent généralement selon un axe B respectif à chaque bras 46, 48. L'axe B est ici illustré radialement à l'axe 4.

La figure 4 illustre une vue partielle du module 47 selon un axe B, vu radialement depuis l'extérieur. On peut y voir la surface externe 53.1 du moyeu et l'espace inter-bras 56, entre deux bras 46 circonférentiellement adjacents. La flèche 14 représente la direction générale du flux qui est sensiblement axiale (parallèle à l'axe 4) en entrée ou en sortie du compresseur.

Une portion du rotor figure à droite de la figure 4 avec les aubes 40 et une flèche indiquant le sens de rotation du rotor.

Le bras 46 dispose d'un bord d'attaque 46.1 et d'un bord de fuite 46.2.

Dans l'espace inter-bras 56 sont agencées des aubes 39. Dans cet exemple, les aubes 39 sont complètement comprises dans cet espace 56. Plus particulièrement, les bords de fuite 46.2 des bras sont alignés axialement avec les bords de fuite 39.2 des aubes 39. Les bords de fuite 39.2 et 46.2 sont préférentiellement identiques.

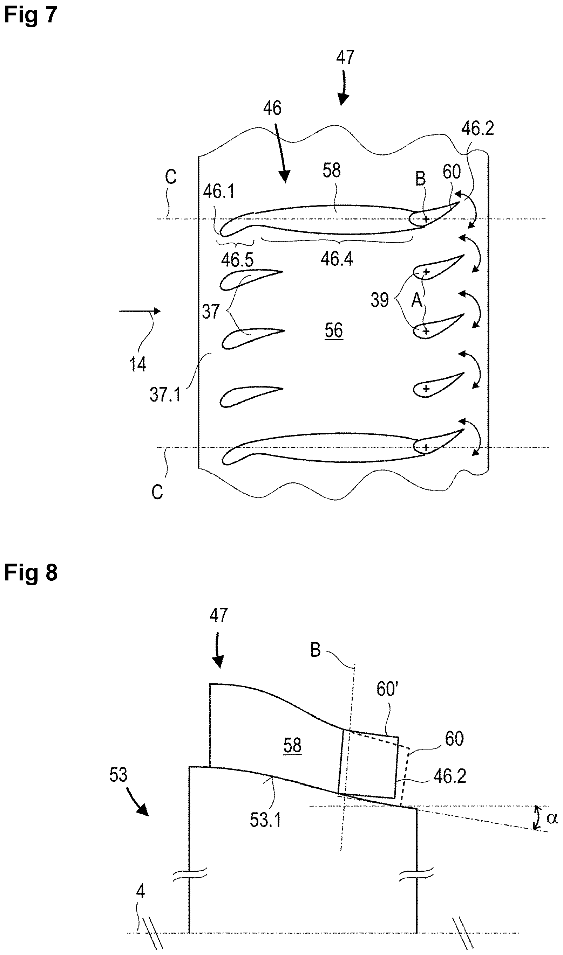

Alternativement ou en combinaison, des aubes peuvent être prévues en regard de la portion amont 58 et peuvent présenter un bord d'attaque aligné avec le bord d'attaque 46.1 des bras (voir aubes 37 sur la figure 7).

Du fait de l'intégration des aubes 39 dans les espaces inter-bras, le flux d'air 14 peut rencontrer des aubes rotoriques (voir 40 ou 52 sur la figure 1) directement en aval du module 47.

Le bras 46 est fait d'une portion amont fixe 58 et d'une portion aval pivotable, ou volet 60. Le volet 60 pivote selon l'axe B, radial et passant par le bras 46. Le pivotement des volets 60 peut être commandé par le même mécanisme d'actionnement que celui qui oriente les aubes 39.

L'axe B peut être à une position axiale entre 60 et 90% de la corde des bras.

La portion amont 58 peut être sensiblement symétrique par rapport à un axe C parallèle à l'axe 4 de la turbomachine 2.

Le volet 60 peut avoir un profil identique à celui des aubes 39, dans cette vue en coupe perpendiculaire à l'axe B. Alternativement les profils peuvent être différents.

Le volet 60 ne s'étend pas sur plus d'un tiers de la longueur axial du bras 46.

L'épaisseur circonférentielle des aubes 39 est telle que les aubes 39 occupent moins de 20% de la section de l'espace inter-bras 56.

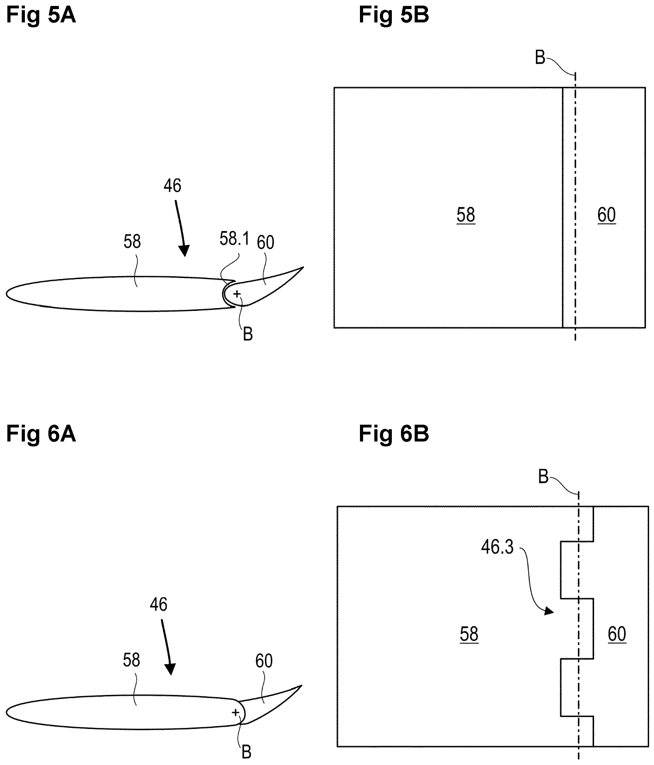

Les figures 5A et 5B montrent la portion fixe 58 et le volet 60 selon une première variante. La portion fixe 58 dispose d'une cavité 58.1 qui a une forme de portion de cylindre. Le volet 60 est de forme complémentaire et est reçu dans la cavité 58.1. L'axe de la portion de cylindre de la cavité 58.1 peut coïncider avec l'axe B de pivotement du volet 60.

Un tel agencement permet une continuité de la surface de guidage de l'air entre la portion fixe 58 et le volet 60.

Les figures 6A et 6B représentent une deuxième variante. Dans cet exemple, une charnière 46.3 permet d'assembler le volet 60 à la portion fixe 58.

La figure 7 illustre un autre exemple du module de carter 47.

Une portion 46.4 du bras est symétrique par rapport à l'axe C et une portion amont 46.5 est asymétrique par rapport à l'axe C. La portion amont 46.6 a dans cet exemple un profil qui correspond à celui des aubes 37 et donc avec un intrados et un extrados. Les aubes 37 sont ici agencées complètement dans l'espace inter-bras 56.

Si deux rangées d'aubes statoriques 37, 39 sont agencées dans l'espace inter-bras 56, seule une des rangées 39 est à orientation variable dans cette illustration.

La figure 8 montre une vue partielle du module 47 en coupe longitudinale. Le moyeu 53 comprend une surface radialement externe 53.1 qui délimite intérieurement la veine d'air (numéro 8 sur la figure 2). Cette surface 53.1 tend à se rapprocher de l'axe 4 vers l'aval. Le volet 60 est schématiquement représenté en trait pointillé dans une position où il forme un petit angle avec l'axe 4 (le flux n'étant pas ou peu dévié tangentiellement). En trait plein est montré le volet 60' dans une autre position, avec un angle d'orientation plus important, déviant ainsi le flux d'air.

Dans la position avec un grand angle, le point radialement intérieur du bord de fuite 46.2 se dégage de la surface 53.1. Ce dégagement génère des pertes aérodynamiques. Le même problème se pose au niveau des aubes 39 qui se dégagent de la surface 53.1 dans certaines positions angulaires.

Il convient donc de prévoir un agencement de la surface 53.1, des volets 60 et des aubes 39 qui est tel qu'au droit du bord de fuite 39.2, 46.2 (dans toutes les positions d'orientation des volets 60 et des aubes 39), la surface 53.1 ne soit pas inclinée de plus de 10° par rapport à l'axe 4 de la turbomachine. Cette limite angulaire est matérialisée par l'angle α sur la figure 8.

Alternativement, le moyeu 53 peut présenter une surface externe 53.1 qui n'est pas axisymétrique et qui présente des portions sensiblement planes qui « suivent » la trajectoire du bord interne des volets 60. Ainsi, un jeu constant ou un contact permanent peut être obtenu entre le volet 60 et la surface 53.1, et ce pour toutes les orientations du volet 60. La même conception peut s'appliquer en complément ou en alternative au droit des aubes 39.

On observe également sur la figure 8 que l'axe B n'est pas nécessairement purement radial et peut être par exemple normal à la surface 53.1. Il en va de même pour l'axe A de pivotement des aubes 39.

En effet, dans les exemples illustrés aux figures précédentes, les axes A et B sont représentés comme étant radiaux par commodité de représentation et de compréhension des concepts de l'invention. Néanmoins l'invention ne saurait être limitée à des axes A et B purement radiaux et en particulier une inclinaison par rapport à l'axe 4 (comme sur la figure 8) ou un déport (axes A et/ou B ne passant pas par l'axe 4 dans la figure 3) sont également envisageables.

L'homme du métier reconnaîtra que les différents modes de réalisation présentés ici peuvent être combinés et l'enseignement de l'un des modes de réalisation peut être appliqué à tous les autres modes de réalisation.

Aussi, les exemples illustrés montrent trois aubes entre deux bras adjacents. D'autres nombres d'aubes peuvent être prévus, notamment lorsque les bras sont irrégulièrement espacés angulairement. On choisira avantageusement un nombre d'aubes compris entre 3 à 10 dans chaque espace inter-bras.

## Revendications

1. Module (47, 49) de compresseur (24, 26) de turbomachine (2), comprenant :
- un moyeu central (53) sensiblement axisymétrique ;
- un anneau externe (55), coaxial au moyeu central (53) ; et
- une rangée annulaire de bras (46, 48) s'étendant du moyeu central (53) à l'anneau externe (55), chaque bras (46, 48) disposant d'une portion amont (58), fixe, et d'un volet aval pivotable (60), les bras (46, 48) définissant des espaces inter-bras (56) entre deux bras (46, 48) circonférentiellement adjacents ; et
une rangée annulaire d'aubes statoriques (37, 39, 45) à orientation variable s'étendant du moyeu central (53) à l'anneau externe (55), les aubes statoriques (37, 39, 45) étant disposées au moins partiellement dans les espaces inter-bras (56).

2. Module (47, 49) selon la revendication 1, **caractérisé en ce que** la portion amont (58) dispose d'une cavité (58.1) ouverte vers l'aval et formant une portion de cylindre, le volet (60) étant reçu dans ladite cavité (58.1).

3. Module (47, 49) selon l'une des revendications précédentes, **caractérisé en ce que** la rangée annulaire d'aubes statoriques (37) est une première rangée, et le module (47, 49) comprend en outre une seconde rangée annulaire d'aubes statoriques (39) agencée dans les espaces inter-bras (56) et axialement distante de la première rangée d'aubes.

4. Module (47, 49) selon l'une des revendications précédentes, **caractérisé en ce que** la portion amont (58) de chaque bras (46, 48) est symétrique par rapport à un axe (C) parallèle à l'axe du moyeu (4).

5. Module (47, 49) selon l'une des revendications précédentes, **caractérisé en ce que** les aubes (39) et les volets (60) disposent de bords de fuite (39.2, 46.2) respectifs qui partagent une position axiale commune.

6. Module (47, 49) selon l'une des revendications précédentes, **caractérisé en ce que** le moyeu central (53) comprend une surface (53.1) radialement externe de guidage du flux d'air dont l'orientation au droit des volets (60) forme un angle (α) avec l'axe de symétrie (4) du moyeu central (53) qui est compris entre 0 et 10°.

7. Module (47, 49) selon l'une des revendications précédentes, **caractérisé en ce que** les volets (60) ont une section respective sensiblement identique à la section des aubes (39).

8. Module (47, 49) selon l'une des revendications précédentes, **caractérisé en ce qu'**un mécanisme d'actionnement commun (51) commande l'orientation des aubes (39) et le pivotement des volets (60).

9. Turbomachine (2) comprenant un compresseur basse-pression (24) et/ou un compresseur haute-pression (26), muni d'un module (47, 49) selon l'une des revendications 1 à 8, la turbomachine comprenant une rangée d'aubes rotoriques (40, 52) directement en aval du module (47, 49).

## Patentansprüche

1. Ein Kompressormodul (47, 49) einer Turbomaschine (2), das folgendes umfasst:
- eine im Wesentlichen achsensymmetrische zentrale Nabe (53);
- einen Außenring (55), der koaxial zur zentralen Nabe (53) angeordnet ist; und
- eine Reihe von kreisförmig angeordneten Armen (46, 48), die sich von der zentralen Nabe (53) zu dem Außenring (55) erstrecken, wobei jeder Arm (46, 48) einen stromaufwärts gelegenen festen Abschnitt (58) und eine stromabwärts gelegene schwenkbare Klappe (60) aufweist, wobei die Arme (46, 48) Zwischenräume (56) zwischen zwei in Umfangsrichtung benachbarten Armen (46, 48) definieren; und
eine Reihe von kreisförmig angeordneten und unterschiedlich ausgerichteten Statorschaufeln (37, 39, 45), die sich von der zentralen Nabe (53) zum Außenring (55) erstrecken, wobei die Statorschaufeln (37, 39, 45) zumindest teilweise in den Räumen zwischen den Armen (56) angeordnet sind.

2. Ein Modul (47, 49) nach Anspruch 1, **dadurch gekennzeichnet, dass** der stromaufwärtige Abschnitt (58) einen Hohlraum (58.1) aufweist, der zum stromabwärtige Abschnitt offen ist und einen zylindrischen Abschnitt bildet, wobei die Klappe (60) in diesen Hohlraum (58.1) eintritt.

3. Ein Modul (47, 49) nach einem der vorhergehenden Ansprüche, **dadurch gekennzeichnet, dass** die Reihe der kreisförmig angeordneten Statorschaufeln (37) eine erste Reihe ist und das Modul (47, 49) außerdem eine zweite Reihe von kreisförmig angeordneten Statorschaufeln (39) in den Zwischenräumen zwischen den Armen (56) und axial beabstandet von der ersten Reihe von Schaufeln umfasst.

4. Ein Modul (47, 49) nach einem der vorhergehenden Ansprüche, **dadurch gekennzeichnet, dass** der stromaufwärtige Abschnitt (58) eines jeden Arms (46, 48) symmetrisch um eine Achse (C) parallel zur Nabenachse (4) ist.

5. Ein Modul (47, 49) nach einem der vorhergehenden Ansprüche, **dadurch gekennzeichnet, dass** die Schaufeln (39) und Klappen (60) Hinterkanten (39.2, 46.2) aufweisen, die eine gemeinsame axiale Position haben.

6. Ein Modul (47, 49) nach einem der vorhergehenden Ansprüche, **dadurch gekennzeichnet, dass** die zentrale Nabe (53) eine radial äußere luftstromleitende Fläche (53.1) aufweist, deren Ausrichtung in Linie mit den Klappen (60) einen Winkel (α) mit der Symmetrieachse (4) der zentralen Nabe (53) zwischen 0 und 10° bildet.

7. Ein Modul (47, 49) nach einem der vorhergehenden Ansprüche, **dadurch gekennzeichnet, dass** die Klappen (60) einen Querschnitt aufweisen, der im Wesentlichen mit dem Querschnitt der Schaufeln (39) identisch ist.

8. Ein Modul (47, 49) nach einem der vorhergehenden Ansprüche, **dadurch gekennzeichnet, dass** ein gemeinsamer Antriebsmechanismus (51) die Ausrichtung der Schaufeln (39) und das Schwenken der Klappen (60) steuert.

9. Eine Turbomaschine (2) mit einem Niederdruckkompressor (24) und/oder einem Hochdruckkompressor (26), der mit einem Modul (47, 49) nach einem der Ansprüche 1 bis 8 versehen ist, wobei die Turbomaschine eine Reihe von Rotorschaufeln (40, 52) aufweist, die direkt stromabwärts des Moduls (47, 49) angeordnet sind.

## Claims

1. A compressor module (47, 49) for a turbomachine (2), comprising:
- a substantially axisymmetric central hub (53);
- an outer ring (55), coaxial with the central hub (53); and
- an annular row of struts (46, 48) extending from the central hub (53) to the outer ring (55), each strut (46, 48) having a fixed upstream portion (58) and a pivotable downstream flap (60), the struts (46, 48) defining inter-strut spaces (56) between two circumferentially adjacent struts (46, 48); and
an annular row of variable stator vanes (37, 39, 45) extending from the central hub (53) to the outer ring (55), the variable stator vanes (37, 39, 45) being disposed at least partially in the inter-strut spaces (56).

2. Module (47, 49) according to claim 1, **characterised in that** the upstream portion (58) has a cavity (58.1) that is open towards the downstream side and that forms a cylinder portion, the flap (60) being received in said cavity (58.1).

3. Module (47, 49) according to any of the preceding claims, **characterised in that** the annular row of stator vanes (37) is a first row, and the module (47, 49) further comprises a second annular row of stator vanes (39) arranged in the inter-strut spaces (56) and axially distant from the first row of vanes.

4. Module (47, 49) according to any of the preceding claims, **characterised in that** the upstream portion (58) of each strut (46, 48) is symmetrical about an axis (C) parallel to the axis of the hub (4).

5. Module (47, 49) according to any of the preceding claims, **characterised in that** the vanes (39) and the flaps (60) have respective trailing edges (39.2, 46.2) which share a common axial position.

6. Module (47, 49) according to any of the preceding claims, **characterised in that** the central hub (53) comprises a radially outer airflow guiding surface (53.1) whose orientation in line with the flaps (60) forms an angle (α) with the axis of symmetry (4) of the central hub (53) which is between 0 and 10°.

7. Module (47, 49) according to one of the preceding claims, **characterised in that** the flaps (60) have a respective cross-section substantially identical to the cross-section of the vanes (39).

8. Module (47, 49) according to one of the preceding claims, **characterised in that** a common actuating mechanism (51) controls the orientation of the vanes (39) and the pivoting motion of the flaps (60).

9. Turbomachine (2) comprising a low-pressure compressor (24) and/or a highpressure compressor (26), provided with a module (47, 49) according to any of claims 1 to 8, the turbomachine comprising a row of rotor blades (40, 52) directly downstream of the module (47, 49).
